Europäisches Patentamt

European Patent Office

Office européen des brevets

(11) Publication number: **0 257 977**
**A2**

(12) **EUROPEAN PATENT APPLICATION**

(21) Application number: **87307343.1**

(22) Date of filing: **19.08.87**

(51) Int. Cl.4: **G 01 S 7/02**

(30) Priority: **20.08.86 GB 8620293**

(43) Date of publication of application:
**02.03.88 Bulletin 88/09**

(84) Designated Contracting States: **DE FR IT NL SE**

(71) Applicant: **THE MARCONI COMPANY LIMITED**
**The Grove Warren Lane**
**Stanmore Middlesex HA7 4LY (GB)**

(72) Inventor: **Simpson, William Melvin**
**10 Canterbury Way Croxley Green**
**Rickmansworth Hertfordshire WD3 3SS (GB)**

(74) Representative: **Keppler, William Patrick**
**Central Patent Department Wembley Office The General**
**Electric Company, p.l.c. Hirst Research Centre East Lane**
**Wembley Middlesex HA9 7PP (GB)**

(54) **Radar receiver.**

(57) A radar receiver for analysing received signals, particularly C.W. signals [Fig. 2(a)], and extracting timing information, in which the received signal is mixed (7) with a ramp frequency modulated signal [Fig. 2(b)], the swept frequency range being such that the mixer output passes through the passband of a frequency compression filter (15) which complements the frequency sweep to produce a regular pulse output [Fig. 2(c)]. A received pulse signal [Fig. 3(a)] can then be accommodated by ensuring that the swept mixer output still includes a portion within the filter passband ($f_4 - f_3$).

BLOCK DIAGRAM OF C.W. RECEIVER

Fig.1

Bundesdruckerei Berlin

EP 0 257 977 A2

**Description**

Radar Receiver

This invention relates to radar receivers and particularly to passive radar receivers designed to intercept transmissions from a target which may itself be a missile or aircraft. The receiver may be incorporated in a missile and will normally be designed to operate against targets transmitting pulsed waveforms. The rising and falling edges of the pulses are used to generate timing and control signals. These signals determine the time at which angle measurements are made, enabling the pulse width and PRI (pulse repetition interval) of the waveform to be measured. These signals also provide "dead" periods when housekeeping, averaging and data sampling operations may be undertaken.

The interception of continuous wave (CW) signals causes difficulties in that the above timing and reference information is basically not available. One solution is simply to 'chop' the CW signal to form pulses. This, however, reduces the signal-to-noise ratio and consequently reduces the probability of the receiver correctly detecting the source.

An object of the present invention is to provide a receiver which can intercept a CW target signal and modify the signal in such a way as to provide the necessary timing information during the presence of the signal while enhancing the signal-to-noise ratio and probability of target detection.

According to one aspect of the present invention, a radar receiver includes means for modulating an input signal with a sweep frequency signal, frequency compression filter means to which the modulated signal is applied, that part of the modulated signal within the frequency bandwidth of the compression filter means being compressed to provide a regular pulse train and a timing capability.

The input signal may be continuous wave, the pulse train then having a pulse repetition interval determined by the sweep frequency period. Alternatively, the input signal may be a pulse signal, the pulse train then having a pulse repetition interval determined by the pulse repetition interval of the input signal.

There are preferably included means for limiting the frequency range of the sweep frequency signal to ensure that no pulses of the input signal are lost by modulation to a value outside the bandwidth of the compression filter. The means for limiting the frequency range of the sweep frequency signal may be arranged to produce a modulated signal frequency range within the bandwidth of the compression filter.

According to another aspect of the invention, in a method of deriving timing information from a received radar target signal, the signal is modulated by a sweep frequency signal, the modulated signal is applied to frequency compression filter means and the resulting pulse train is processed to extract timing information.

The frequency range of the modulated signal may be set substantially within the bandwidth of the frequency compression filter means, whereby to detect both CW and pulse input signals.

One embodiment of a radar receiver in accordance with the invention will now be described, by way of example, with reference to the accompanying drawings, of which:

Figure 1 is a block diagram of the relevant parts of the receiver;

Figure 2(a) is a diagram of a CW input signal;

Figure 2(b) is a diagram of a modulated version of the CW input signal;

Figure 2(c) is a diagram of a compressed pulse signal resulting from the application of the invention;

Figure 3(a) is a diagram of a pulsed input signal;

Figure 3(b) the modulated pulse signal;

Figure 3(c) the resulting compressed pulse signal;

Figure 3(d) an alternative limited sweep/high repetition rate modulating signal for use with the pulsed input signal of Figure 3(a);

and Figure 3(e) the compressed pulse signal resulting from use of the modulating signal of Figure 3(d) and the pulsed input signal of Figure 3(a);

Figure 4(a) shows the signal of Figure 3(d) on a larger scale in conjunction with the pulsed input signal of Figure 4(b) on the same larger scale;

and Figure 4(c) and 4(d) show the modulating characteristic and a filter characteristic respectively.

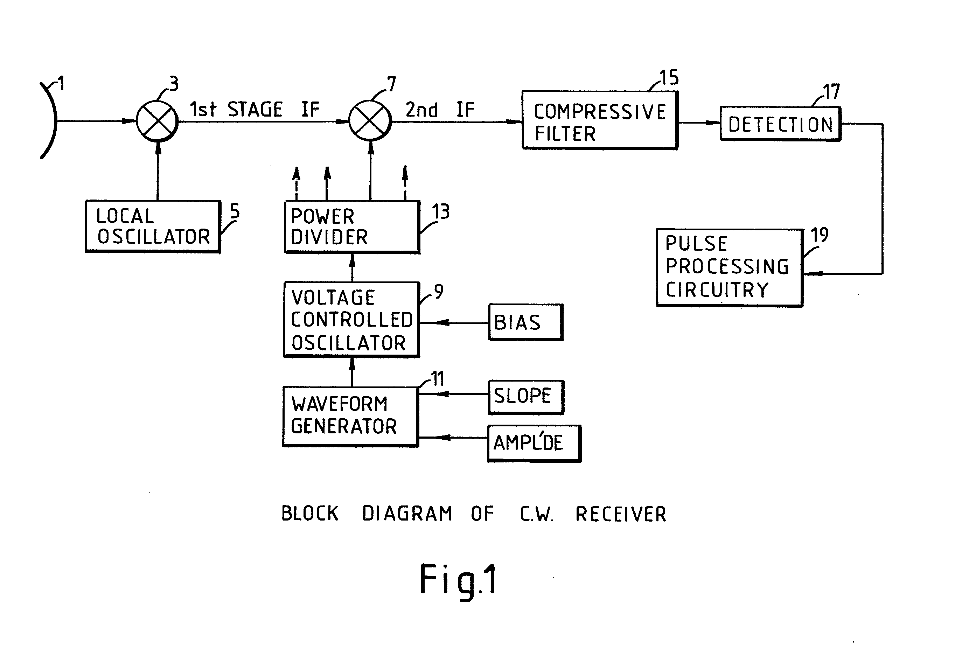

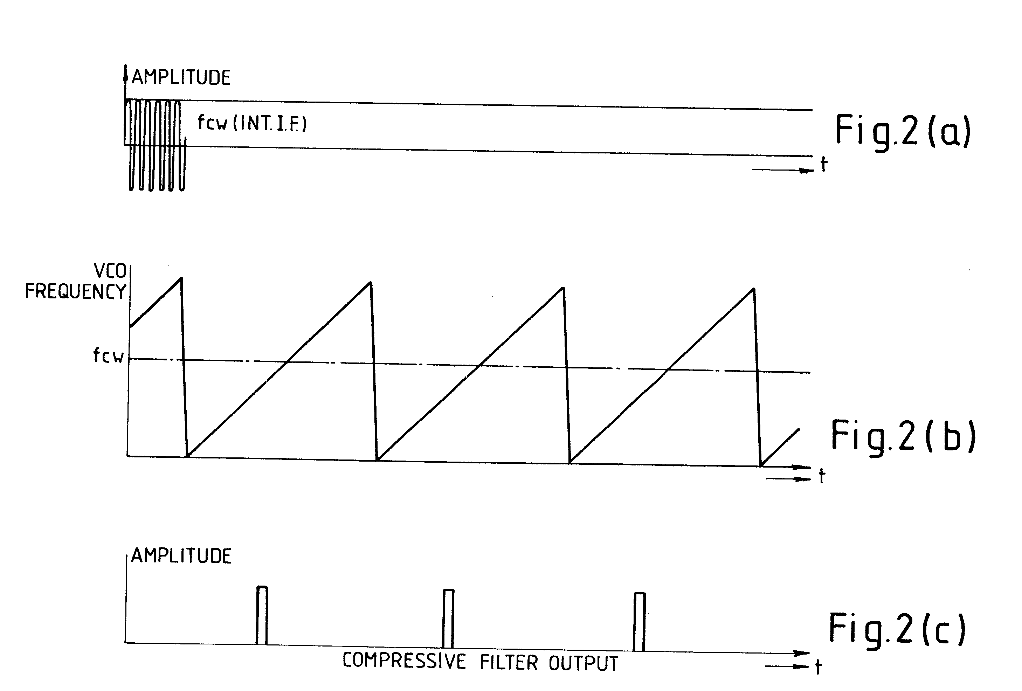

Referring to Figure 1, an antenna 1 supplies received radar signals to a mixer 3 to which a local oscillator (5) signal is also applied to give a first I.F. (intermediate frequency) signal, of, typically, 4 GHz, depending of course on the intercepted signal frequency. This first signal is applied to a further mixer 7 which also receives a modulating signal from a voltage controlled oscillator 9. This VCO produces a swept-frequency signal such as shown in Figure 2(b) under the control of a waveform generator 11 which produces a ramp signal of controllable slope and amplitude, and thus of controlled frequency. A bias input to the VCO determines the centre frequency.

The VCO output signal is divided by a power divider 13 to produce four identical signals for use in four similar circuits.

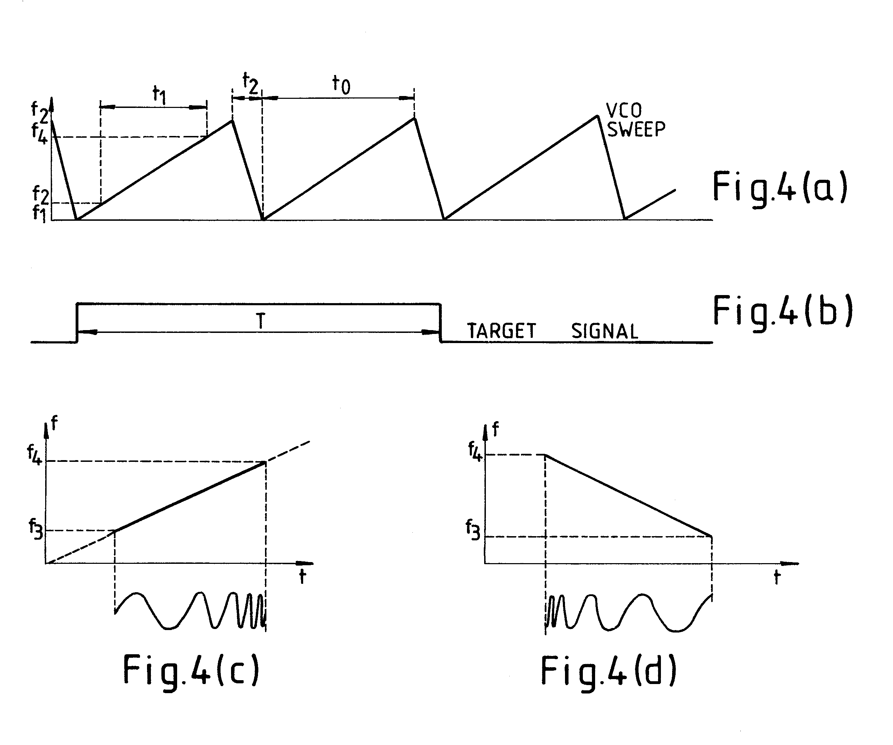

In the case illustrated in Figure 2, of a CW input signal, the second-IF output of mixer 7, shown in Figure 2(b), is a swept-frequency signal similar to the output of the VCO 9 but shifted in frequency by the CW first-IF. This frequency modulated signal is applied to a compressive filter 15, the characteristic of which is shown in Figure 4(d). The filter has a pass band of perhaps 20 MHz between frequencies $f_3$ and $f_4$ but has the special characteristic that the time delay imposed on a signal in the pass band is inversely proportional to the frequency. Thus $f_4$

suffers a smaller delay than $f_3$. It will be apparent that a signal in which the higher frequencies are produced at a later time than the lower frequencies will suffer a time compression. Thus a swept signal such as the second-I.F. output of mixer 7, and as shown in Figure 4(c), will suffer compression, the high frequencies tending to 'catch up' earlier, lower frequencies.

The sweep rate is controlled to match the filter characteristic so that the time between occurrence of two discrete input frequencies is equal to the difference in the transmission times of the two signals through the filter. For a CW input signal and thus a continuous frequency-modulated signal (as Fig. 2(b)) input to the compression filter, the output pulse width, i.e., of the pulses shown in Figure 2(c), is determined by the inverse of the filter bandwidth.

A detection circuit 17 detects the presence of the pulses of Figure 2(c), confirming or rejecting their occurrence, and the confirmed pulses are applied to pulse processing circuitry 19 for extraction of timing information.

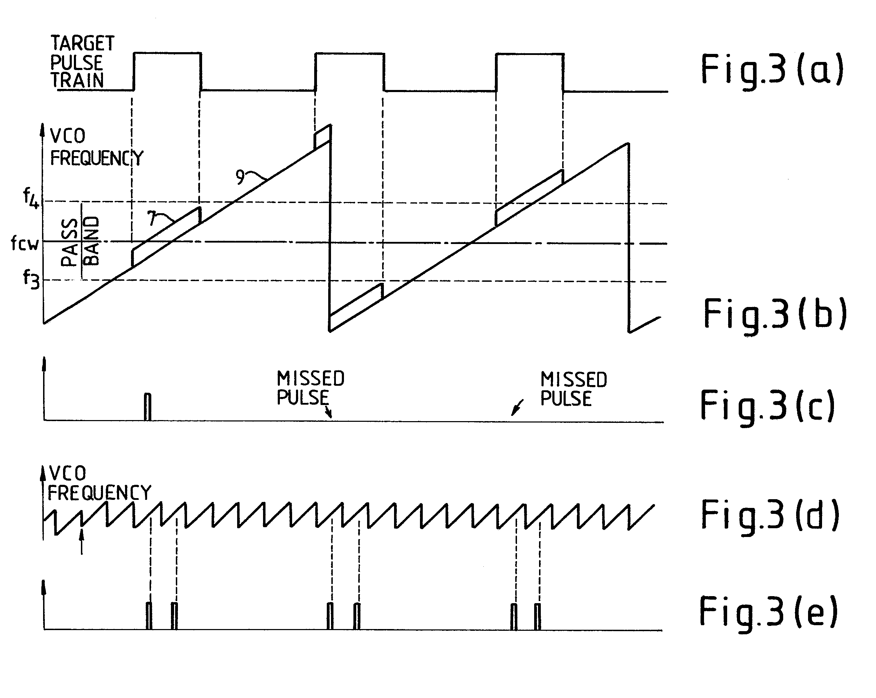

It is of course essential for the modulated signal frequency range to fall within the filter pass band $f_4$ - $f_3$ on at least some cycles of the ramp signal. If the receiver is set up for detection of CW signals as above, and is then required to respond to a pulse signal from the target some target pulses may be missed. Thus, referring to Figures 3(a), (b) and (c), the received target signal (Figure 3(a)) is assumed to be pulses or bursts of radio frequency oscillation. The slope of the modulating signal from the VCO, is predetermined to match the filter characteristic so that if the maximum search range of the VCO, say 100 MHz, is set, the period, and thus the repetition rate of the sweep signal is also determined. This may then be comparable to or less than that of the target signal ('less than' in Figure 3(b)). Figure 3(b) shows the modulating signal 9', the modulated signal 7', and the filter pass band $f_4$ - $f_3$. The modulated signal 7' which the filter 15 sees, occurs only within the pulse width of the input signal. If the input pulse occurs too high up or too low down the VCO signal slope, the resulting modulated signal pulse may well occur outside the filter passband. This is shown to occur completely with the second pulse and largely with the third pulse of Figure 3(a) with the result that the corresponding output pulses of the compressive filter are not produced. Timing information may be difficult to extract or may be unsatisfactory in such circumstances.

This problem may be overcome as illustrated in Figures 3(d) and 3(e). The repetition rate of the VCO modulating signal is increased without changing its slope, by reducing the generator 11 ramp signal, and thus the frequency search range of the VCO, until the modulated signal lies substantially within the bandwidth of the compression filter. This increase in repetition rate, shown in Figure 3(d), does imply a reduction of VCO sweep range and it may be necessary as shown in the early part of the Figure 3(d) waveform, to step the centre frequency of the VCO by means of the bias input, until the modulated frequency range at least embraces, and preferably lies within, the filter pass band. The reduction of the modulated signal sweep range may be limited to such a value as to just ensure that no pulses of the input signal are lost by modulation to a value outside the compression filter bandwidth.

In Figure 3(d) the repetition rate has been increased until the input pulse width embraces two sweep periods, with the result that two compressed pulses are produced by the filter. It may be seen that this situation will remain even with random phase correspondence between the VCO and the input pulse signal.

For high duty ratio target signals (Figure 3(a)), the pulse width (of Figure 3(e)) is again defined by the inverse of the filter bandwidth but the PRI (pulse repetition interval) is defined by the target PRI (i.e. the group repetition interval of Figure 3(e)) as opposed to the sweep rate in the CW case (Figure 2).

Figure 4 shows to a larger scale the relationship between the modulated signal 4(a) and the target pulse 4(b) in a particular case. The swept signal has a sweep period of $t_0$, a flyback period $t_2$, and in this example $t_0 + t_2 = T/2$ where T is the target pulse width. The swept range is $f_2$ - $f_1$ and the filter bandwidth $f_4$ - $f_3$ lies within the swept range and is 2/3 of it. The compression gain is $t_1(f_4$ - $f_3)$ where $t_1$ is the time taken for the sweep signal to scan the filter bandwidth.

The embodiment described above with reference to Figure 1 may, of course, be modified in a number of ways : for example, the input to mixer 7 may be direct from the antenna, at radio frequency. Again, the above system caters for a receiver having four channels, with perhaps different local oscillator frequencies but two or even one channel might be used.

While the invention is of general application in dealing with CW target signals, it is particularly useful in a known four-channel radar receiver providing pulse signal processing of 3-dimensional target direction information. The conversion of CW to pulse signals in such circumstances enables the system to accommodate CW source signals with very little modification of the processor software.

## Claims

1. A radar receiver characterised by means (7) for modulating an input signal (Figures 2(a), 3(a)) with a sweep frequency signal (Figure 2(b)), frequency compression filter means (15) to which the modulated signal (7') is applied, that part of the modulated signal (7') within the frequency ($f_4$ - $f_3$) bandwidth of the compression filter means (15) being compressed to provide a regular pulse train (Figure 2(c)) and a timing capability.

2. A radar receiver according to Claim 1, characterised in that said input signal (Figure 2(a)) is continuous wave and said pulse train (Figure 2(c)) has a pulse repetition interval determined by the sweep frequency period.

3. A radar receiver according to Claim 1, characterised in that said input signal (Figure 3(a)) is a pulse signal and said pulse train (Figure 3(c), 3(e)) has a pulse repetition interval determined by the pulse repetition interval of said input signal (Figure 3(a)).

4. A radar receiver according to Claim 3, characterised by means (11) for limiting the frequency range of the sweep frequency signal (Figure 3(d)) to ensure that no pulses of said input signal (Figure 3(a)) are lost by modulation to a value outside the bandwidth ($f_4 - f_3$) of the compression filter (15).

5. A radar receiver according to Claim 4, characterised in that said means (11) for limiting the frequency range of the sweep frequency signal is arranged to produce a modulated signal frequency range within the bandwidth ($f_4 - f_3$) of the compression filter (15).

6. A radar receiver according to Claim 5, characterised in that said frequency range is such as to produce at least two output pulses (Figure 3(c)) within the duration of a pulse of said input signal (Figure 3(a)).

7. A radar receiver according to any preceding claim, characterised in that said input signal is a target signal.

8. A radar receiver according to any of Claims 1 to 6, characterised in that said input signal is an intermediate frequency signal derived from a target signal.

9. A method of deriving timing information from a received radar target signal, characterised in that the signal (Figure 2(a), 3(a)) is modulated by a sweep frequency signal (Figure 2(b), 3(b)), the modulated signal (7') is applied to frequency compression filter means (15) and the resulting pulse train is processed (19) to extract timing information.

10. A method of deriving timing information in accordance with Claim 9 wherein the frequency range of the modulated signal (Figure 3(d)) is substantially within the bandwidth ($f_4 - f_3$) of the frequency compression filter (15) means, whereby to detect both CW and pulse input signals.

BLOCK DIAGRAM OF C.W. RECEIVER

Fig.1

AMPLITUDE

fcw (INT. I.F.)

Fig.2(a)

t

VCO
FREQUENCY

fcw

Fig.2(b)

t

AMPLITUDE

COMPRESSIVE FILTER OUTPUT

Fig.2(c)

t

TARGET
PULSE
TRAIN

**Fig.3(a)**

VCO
FREQUENCY

$f_4$

fcw

PASS BAND

$f_3$

9

7

**Fig.3(b)**

MISSED PULSE

MISSED PULSE

**Fig.3(c)**

VCO
FREQUENCY

**Fig.3(d)**

**Fig.3(e)**

Fig.4(a)

Fig.4(b)

Fig.4(c)

Fig.4(d)